# EUROPEAN PATENT APPLICATION

(11) **EP 1 341 073 A2**
(43) Date of publication of application: **03.09.2003**
(21) Application number: 03100385.8
(22) Date of filing: 19.02.2003
(51) Int. Cl.: G06F 3/023, G06F 3/033

(54) **Method and system for displaying an icon in a user interface**

(30) Priority: 01.03.2002 EP 02100206
(71) Applicant: AGFA-GEVAERT, 2640 Mortsel (BE)
(72) Inventor: Frings, Peter, AGFA-GEVAERT Corp. IP Dept. 3800, 2640, Mortsel (BE)

(57) **Abstract**

List of reference signs

- 10 :: user interface
- 14 - 16 :: group of icons
- 21 - 32 :: icon
- 21e- 25e:: icon state
- 26o :: icon state
- 27e :: icon state
- 28e :: icon state
- 28n :: icon state
- 28o :: icon state
- 29e :: icon state
- 300- 32o :: icon state

## Description

### FIELD OF THE INVENTION

The invention relates to the field of interaction of a user with a computer by means of a user interface, in particular in a pre-press workflow system.

### BACKGROUND OF THE INVENTION

A user interface is a means that allows a user to interact with a computer. A user interface may be implemented by means of a computer program, running on a computer that is connected to a display. The user can then interact with the computer, typically by using a mouse to make choices from menus or groups of icons shown on the display.

Customarily, the menu items and icons in the user interface have two states: an "enabled" state and a "non-enabled" state. A menu item in the enabled state may be selected; a menu item in the non-enabled state may not be selected. E.g. in a menu of a word processor, the menu item "paste" may initially have the non-enabled state and the menu item "cut" may have the enabled state. When the user cuts a text portion, the menu item "paste" gets the enabled state, so that the user can then select the menu item "paste" and paste the cut text portion.

A pre-press workflow system, as disclosed in patent application **WO 01/25907**, uses such a user interface.

**US-A-5 572 648** discloses a method and an apparatus for displaying a dynamic tool palette in a user interface; the dynamic tool palette is changed in accordance with a current context of an application.

**US-A-6 062 058** discloses a method and apparatus for manipulation of data in a computer-controlled display system that includes an embodiment for selecting and dragging information across application boundaries to windows controlled by different application programs. Once movement of selected information takes place, the selection changes to an outline representation.

There is still a need for an improved system and method for interacting with a computer.

### SUMMARY OF THE INVENTION

The present invention is a method for displaying an icon in a user interface as claimed in independent claim 1, and a user interface in which the method is implemented, as claimed in independent claim 12. Preferred embodiments of the invention are set out in the dependent claims. Preferably, a method in accordance with the invention is implemented by a computer program as claimed in claim 10.

In this document, an "icon" is defined as a representation of an object; preferably the representation is pictorial. Thus, an object is associated with the icon, and vice versa.

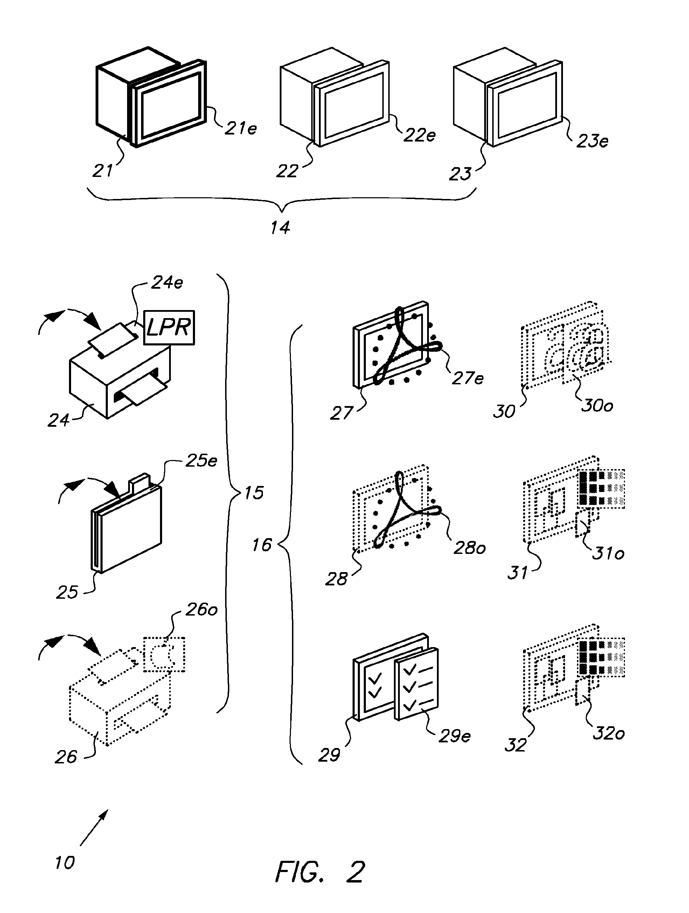

In a user interface in accordance with the invention, an icon may have an "out-of-context" icon state. The out-of-context icon state indicates that the object, associated with the icon, is not related to the current state of the user interface. This is illustrated by Fig. 2 which shows an embodiment of a user interface 10 in accordance with the invention. Icons 21 - 23 depict computers, i.e. the objects associated with icons 21 - 23 are three computers. The icons of icon group 16 depict programs that are active on one or more of these three computers. The computer associated with icon 21 is selected by the user (icon 21 is drawn in Fig. 2 in thick lines), so that the current state of the user interface 10 changes from a state wherein no computer is selected to a state wherein the computer associated with icon 21 is selected. Icon 28, depicting a normalizer, has an out-of-context state 28o, which means that the normalizer is not active on the selected computer. The PreFlight program associated with icon 29 is active on the selected computer; hence icon 29 has an enabled state 29e.

An advantage of the invention is that the relation between objects and the current state of the user interface is shown in a clear and user-friendly way. In the example discussed above, it is immediately clear which programs are active on the selected computer. In the example, the relation between objects and the current state of the user interface results in a relation between at least one 'first' object (in the example: a computer) and at least one 'second' object (in the example: a computer program).

In another embodiment of the invention, a relation between objects is directly established, not via the intermediary of the state of the user interface. This results, in the example discussed above, in a direct relation between at least one 'first' object and at least one 'second' object.

In a preferred embodiment of the invention, an object associated with an icon in an out-of-context icon state may be operated upon; e.g. the normalizer depicted by icon 28 may be selected and may be run by the user.

Preferred embodiments of a user interface in accordance with the invention may include features of a method - as claimed or as described above or below - in accordance with the invention.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 shows a first embodiment of a system in accordance with the invention;
Fig. 2 shows a second embodiment of a system in accordance with the invention.

### DETAILED DESCRIPTION OF THE INVENTION

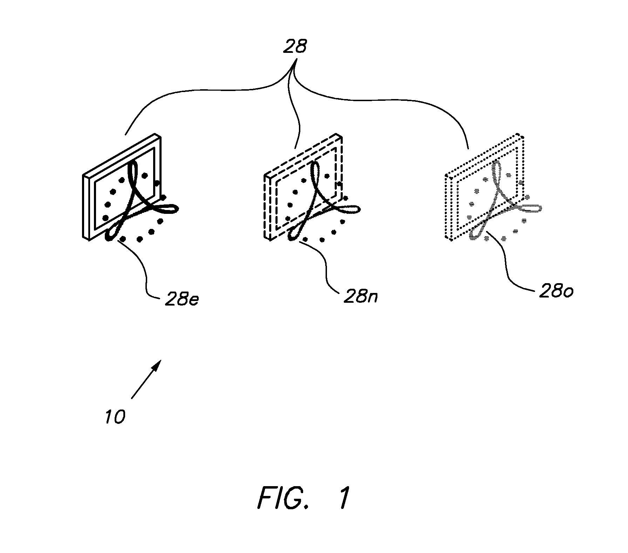

Fig. 1 illustrates different icon states. It shows a simple but rather fictitious user interface 10 wherein the same icon 28 is shown in three icon states: an enabled icon state 28e, a non-enabled icon state 28n and an out-of-context icon state 28o. In Fig. 1, the enabled icon state 28e is represented by full lines, whereas the non-enabled icon state 28n is represented by dashed lines and the out-of-context icon state 28o is represented by yet another line type. In a preferred embodiment of the invention, the out-of-context icon state 28o is represented as a vague, unsharp icon that looks like "moved to the background". A preferred representation of the enabled icon state 28e is by normal, i.e. dark, full lines, while the non-enabled icon state 28n is preferably represented by lighter colors, i.e. gray instead of black, etc.

Fig. 2 shows a user interface 10 with three groups 14, 15, 16 of icons. The icons 21 - 23 of group 14 depict computers, the icons 24 - 26 of group 15 depict input means that can deliver input to one or more of these computers and the icons 27 - 32 of group 16 depict programs that are active on one or more of these computers. Icons 21 - 23 have enabled states 21e - 23e, so that the computers associated with these icons may be selected by the user. In Fig. 2, the computer associated with icon 21 is selected by the user (shown in Fig. 2 by the thicker lines used for icon 21). It is immediately clear which input means cannot deliver input to the selected computer and which programs are not active on the selected computer, since user interface 10 shows the icons associated with these input means and programs in an out-of-context state. Thus, icon 26, depicting an AppleTalk input means, is shown in out-of-context state 26o. Likewise, icon 28, depicting a normalizer, has out-of-context state 28o; icon 30, depicting a trapper, has out-of-context state 30o; icon 31, depicting a trapping RIP, has out-of-context state 31o and icon 32, depicting another trapping RIP, has out-of-context state 32o. On the other hand, icon 24, depicting an LPR input means, is shown in enabled state 24e and icon 25, depicting a hot folder, is shown in enabled state 25e, meaning that the input means associated with these icons 24, 25 can deliver input to the selected computer. Likewise, icon 27, depicting another normalizer, has enabled state 27e and icon 29, depicting a PreFlight program, has enabled state 29e, which means that the programs associated with these icons 27, 29 are active on the selected computer.

Thus, as illustrated by Fig. 2 and as discussed already further above, in a user interface 10 in accordance with the invention an icon may have an "out-of-context" icon state; the out-of-context icon state indicates that the object, associated with the icon, is not related to the current state of the user interface. In a preferred embodiment of the invention, an icon may also have an enabled state; it is preferred that an icon may further have a non-enabled state. If the icon has an enabled state or a non-enabled state, the object, associated with the icon, is related to the current state of the user interface. An object associated with an icon in an enabled state may be operated upon while an object associated with an icon in an non-enabled state may not be operated upon.

In a preferred embodiment of the invention, an object associated with an icon in an out-of-context icon state may be operated upon.

A method in accordance with the invention preferably includes checking if an object associated with an icon is related to a current state of a user interface and determining an icon state of the icon, based on the relation resulting from the check. If the object is not related to the current state of the user interface, the determined icon state is an out-of-context icon state. The icon may then be displayed in the user interface.

A preferred application of a method in according with the invention is pre-press workflow, as disclosed in patent application **WO 01/25907**, mentioned already above.

Having described in detail preferred embodiments of the current invention, it will now be apparent to those skilled in the art that numerous modifications can be made therein without departing from the scope of the invention as defined in the appending claims.

## Claims

1. A method for displaying an icon (28) in a user interface (10), the method comprising the step of:
- determining an icon state (28e, 28n, 28o) of said icon (28);
**characterized in that** the method further comprises the step of:
- checking if an object associated with said icon (28) is related to a current state of said user interface (10);
wherein said determined icon state (28e, 28n, 28o) is an out-of-context icon state (280) if said object is not related to said current state of said user interface (10).

2. The method according to claim 1 wherein said determined icon state (28e, 28n, 28o) is selected from the group of an enabled icon state (28e) and a non-enabled icon state (28n) if said object is related to said current state of said user interface (10).

3. The method according to claim 1 or claim 2 further comprising the steps of:
- selecting a second object;
- changing a state of said user interface (10) from said current state to a second state, wherein said second state is related to said second object.

4. The method according to claim 3 further comprising the steps of:
- displaying a second icon (21), associated with said second object, in said user interface (10);
- selecting said second object by selecting said displayed second icon (21) by a user.

5. The method according to claim 3 or claim 4 further comprising the step of:
- checking if said second object is related to a third object.

6. The method according to claim 5 further comprising the step of:
- determining an icon state (24e, 26o) of a third icon (24, 26) associated with said third object, wherein said icon state (24e, 26o) of said third icon (24, 26) is said out-of context icon state (260) if said third object is not related to said second object and wherein said icon state (24e, 26o) of said third icon (24, 26) is different (24e) from said out-of context icon state (260) if said third object is related to said second object.

7. The method according to claim 6 wherein said icon state (24e, 26o) of said third icon (24, 26) is selected from the group of said enabled icon state (24e) and said non-enabled icon state if said third object is related to said second object.

8. A method for managing a pre-press workflow comprising the steps of the method according to any one of claims 1 to 7.

9. A data processing system comprising means for carrying out the steps of the method according to any one of claims 1 to 7.

10. A computer program comprising computer program code means adapted to perform the steps of the method according to any one of claims 1 to 7 when said program is run on a computer.

11. A computer readable medium comprising program code adapted to carry out the method according to any one of claims 1 to 7 when run on a computer.

12. A user interface (10) for interacting of a user with a computer, said user interface (10) comprising an icon (28) associated with an object;
**characterized in that** said icon (28) has an out-of-context icon state (280) wherein said object is not related to a current state of said user interface (10).
